# EUROPÄISCHE PATENTANMELDUNG

(11) **EP 4 016 804 A1**
(43) Veröffentlichungstag der Anmeldung: **22.06.2022**
(21) Anmeldenummer: 20215468.8
(22) Anmeldetag: 18.12.2020
(51) Int. Cl.: H02K 1/27, H02K 1/30, H02K 7/18, H02K 1/14, H02K 1/18

(54) **SEGMENTIERTER GENERATOR, ROTORSEGMENT, GENERATORSEGMENT UND WINDENERGIEANLAGE**

(71) Anmelder: Wobben Properties GmbH, 26607 Aurich (DE)
(72) Erfinder: Feith, Manuel, 26427 Esens (DE); Giengiel, Wojciech, 26607 Aurich (DE); Jöckel, Stephan, 67259 Kleinniedesheim (DE); Sattler, Andreas, 26721 Emden (DE); Fischer, Lars, 26506 Norden (DE); Philipp, Alexander, 68799 Reilingen (DE)
(74) Vertreter: Eisenführ Speiser

(57) **Zusammenfassung**

Rotorsegment eines segmentierten Generators (1), insbesondere eines permanenterregten segmentierten Drehgenerators, einer Windenergieanlage, gekennzeichnet durch ein Magnetträgersegment mit einer Rotorumfangsfläche (212), insbesondere einer Rotoraußenumfangsfläche (212), der sich in einer Umfangsrichtung zwischen einer ersten und zweiten Trennschnittstelle (T1,T2) mit einer Segmentlänge erstreckt; die Rotorumfangsfläche (212) aufweisend einen ersten Trennschnittstellenabschnitt (A1) mit einer ersten Länge (L1) ausgehend von der ersten Trennschnittstelle (T1) in der Umfangsrichtung in Richtung der zweiten Trennschnittstelle (T2); und einen zweiten Trennschnittstellenabschnitt (A2) mit einer zweiten Länge ausgehend von der zweiten Trennschnittstelle (T2) in der Umfangsrichtung in Richtung der ersten Trennschnittstelle (T1); und einen Verbindungsabschnitt (A3) mit einer dritten Länge, die sich zwischen der ersten und zweiten Trennschnittstelle (T1,T2) erstreckt; wobei im Bereich des ersten und zweiten Trennschnittstellenabschnitts (A1,A2) an der Rotorumfangsfläche (212) jeweils eine Versteifungsvorrichtung (400) zur Versteifung des Magnetträgersegments angeordnet ist.

## Beschreibung

Die Erfindung betrifft einen segmentierten Generator für eine Windenergieanlage. Die Erfindung betrifft ferner ein Rotorsegment und ein Generatorsegment eines segmentierten Generators einer Windenergieanlage. Ferner betrifft die Erfindung eine Windenergieanlage.

Eine Windenergieanlage ist eine Anlage, die kinetische Energie von Wind in elektrische Energie wandelt und in ein Stromnetz einspeist. Für die Wandlung der kinetischen Energie zur elektrischen Energie umfasst die Windenergieanlage einen Generator mit einem Rotor, der relativ zu einem Stator um eine Drehachse drehbar gelagert ist. In Abhängigkeit der Lage der Drehachse wird zwischen einer horizontalen und einer vertikalen Windenergieanlage unterschieden. Bei der horizontalen Windenergieanlage ist die Drehachse horizontal ausgerichtet. Bei der vertikalen Windenergieanlage ist die Drehachse vertikal ausgerichtet. Horizontale Windenergieanlagen sind auch als Horizontalachsen-Windenergieanlagen und vertikale Windenergieanlagen sind auch als Vertikalachsen-Windenergieanlagen bekannt.

Moderne Windenergieanlagen betreffen in der Regel sogenannte Horizontalachsen-Windenergieanlagen, bei denen die Drehachse im Wesentlichen horizontal angeordnet ist und die Rotorblätter eine im Wesentlichen senkrechte Rotorfläche überstreichen. Ferner weisen Windenergieanlagen eine Gondel auf, die um eine im Wesentlichen vertikale Achse drehbar auf einem Turm der Windenergieanlage angeordnet ist.

Der Wind bewirkt in einem Betriebszustand der Windenergieanlage eine Drehbewegung der Rotorblätter, die den Rotor eines Generators, welcher mit den Rotorblättern gekoppelt ist, antreiben. In dem Betriebszustand drehen die Rotorblätter und der Rotor relativ zu einem Stator des Generators. Bedingt durch die Relativbewegung zwischen Rotor und Stator erzeugt der (elektrische) Generator elektrische Energie. In dem Betriebszustand der Windenergieanlage ist die Windenergieanlage am Aufstellort aufgebaut und wird für die Wandlung der kinetischen Energie des Windes in elektrische Energie betrieben.

Windenergieanlagen können getriebelos oder mit einem Getriebe ausgeführt sein. Insbesondere getriebelose Windenergieanlagen weisen Generatoren mit einem großen Durchmesser auf. Es ist durchaus üblich, dass die Generatoren einen Durchmesser von 5 m und mehr aufweisen. Diese Generatoren können als sogenannte Innenläufer oder als sogenannte Außenläufer ausgeführt sein. Bei einem Innenläufer ist der mit den Rotorblättern rotierende Rotor des Generators innerhalb eines feststehenden Stators des Generators angeordnet. Bei einem Außenläufer ist der Rotor außerhalb des Stators angeordnet. Bei dem Außenläufer ist der Stator insbesondere innerhalb des Rotors, vorzugsweise in Bezug zu dem Rotor radial innenliegend angeordnet. Unabhängig von der Art des Generators sind Generatoren üblicherweise an der Gondel, insbesondere einem Maschinenträger, der Windenergieanlage befestigt.

Generatoren können eine Masse von 150 t und mehr erreichen. Somit ist der Transport solcher Generatoren stets mit einem hohen Aufwand verbunden. Je nach Größe des Durchmessers und der Masse des Generators kann ein straßengebundener Transport auch schlichtweg unmöglich sein. Um auch Generatoren mit einem großen Durchmesser und einer großen Masse transportieren zu können, ist es bekannt, Generatoren als segmentierten Generator auszubilden. Ein solch segmentierter Generator weist zwei oder mehrere Generatorsegmente auf. Die Generatorsegmente sind üblicherweise teilringförmig ausgebildet bzw. weisen eine teilringförmige Geometrie auf. Die Generatorsegmente werden in der Regel zu einem ringförmigen segmentierten Generator angeordnet. Üblicherweise werden Generatorsegmente vereinzelt zu dem Aufstellort einer Windenergieanlage transportiert.

Der Transport von Generatorsegmenten eines segmentierten Generators mit Elektromagneten ist ohne großen Aufwand ohne weiteres möglich. Sind diese stromlos, wirken keine Magnetkräfte. Weist ein solch segmentierter Generator hingegen Permanentmagnete auf, müssen zusätzliche Befestigungsvorrichtungen vorgesehen werden, die ein Rotorsegment gegenüber einem Statorsegment in einer gewünschten Position halten und den Magnetkräften der Permanentmagnete entgegenwirken. Solche Befestigungsvorrichtungen, die ein Rotorsegment gegenüber einem Statorsegment halten, sind beispielsweise aus EP 2 508 749 B1 und EP 2 454 803 B1 bekannt.

Das Zusammensetzen dieser trotz Segmentierung unhandlichen Bauteile ist mit Herausforderungen verbunden. Die resultierende Verformung, Insbesondere im Bereich von Trennschnittstellen der Generatorsegmente, erschwert das Zusammensetzung und die Montage von Generatorsegmenten zu einem segmentierten Generator einer Windenergieanlage.

Es ist deshalb eine Aufgabe der vorliegenden Erfindung, einen segmentierten Generator für eine Windenergieanlage, ein Rotorsegment eines Generatorsegments, ein Generatorsegment des segmentierten Generators und eine Windenergieanlage bereitzustellen, die einen oder mehrere der genannten Nachteile beseitigen oder vermindern. Insbesondere ist es eine Aufgabe der vorliegenden Erfindung, eine Lösung bereitzustellen, die eine bessere Montierbarkeit des segmentierten Generators für eine Windenergieanlage, des Rotorsegments eines Generatorsegments, des Generatorsegment und der Windenergieanlage ermöglicht.

Gemäß einem ersten Aspekt wird die Aufgabe durch einen segmentierten Generator für eine Windenergieanlage nach Anspruch 1 gelöst.

Sofern nicht ausdrücklich abweichend ausgeführt, sind Angaben zu der Axialrichtung, der Umfangsrichtung und der Radialrichtung in der Beschreibung in Bezug auf die Drehachse des Generators zu verstehen. Die Axialrichtung entspricht einer Richtung parallel, d.h. entlang der Drehachse. Die Umfangsrichtung entspricht einer Richtung im Wesentlichen tangential zu der Drehachse. Die Radialrichtung entspricht einer Richtung radial zu der Drehachse.

Der segmentierte Generator für eine Windenergieanlage umfasst zwei oder mehrere Generatorsegmente. Die zwei oder mehr Generatorsegmente sind bevorzugt ringförmig angeordnet. Insbesondere sind die zwei oder mehr Generatorsegmente koaxial zu einer Drehachse des segmentierten Generators angeordnet. Insbesondere umfasst der segmentierte Generator einen segmentierten Rotor und einen segmentierten Stator. Der segmentierte Rotor umfasst zwei oder mehrere Rotorsegmente. Der segmentierte Stator umfasst zwei oder mehrere Statorsegmente.

Das jeweilige Generatorsegment bzw. das jeweilige Rotorsegment und/oder das jeweilige Statorsegment sind bezogen auf die Drehachse in einer Umfangsrichtung vorzugsweise teilringförmig ausgebildet. Insbesondere weisen das Generatorsegment bzw. das Rotorsegment und/oder das Statorsegment eine teilringförmige Geometrie auf. Ein Generatorsegment bzw. ein Rotorsegment und/oder ein Statorsegment, welches entsprechend teilringförmig ausgebildet ist oder eine teilringförmige Geometrie aufweist, erstreckt sich in der Umfangsrichtung mit einem bestimmten Bogengrad zwischen einer ersten und zweiten Trennschnittstelle.

Vorzugsweise erstrecken sich die zwei oder mehr Generatorsegmente bzw. die zwei oder mehr Rotorsegmente und/oder zwei oder mehr Statorsegmente mit demselben Bogengrad in der Umfangsrichtung. Insbesondere erstrecken sich die Generatorsegmente bzw. die Rotor- und/oder Statorsegmente in Abhängigkeit der Anzahlder jeweiligen Segmente nach folgender Formel: 360°/(Anzahl der Segmente). Hiernach erstrecken sich beispielsweise die Generatorsegmente eines segmentierten Generators, der zwei Generatorsegmente umfasst, in Umfangsrichtung jeweils um 180°, bei drei Generatorsegmenten wären es 120°, bei vier Generatorsegmenten wären es 90° usw. Dies kann entsprechend für die Rotorsegmente und/oder Statorsegmente gelten.

Es kann auch bevorzugt sein, dass die Generatorsegmente aus denen ein segmentierter Generator zusammengesetzt wird, sich in der Umfangsrichtung mit einem unterschiedlichen Bogengrad erstrecken. Beispielsweise kann ein segmentierter Generator aus drei Generatorsegmenten gebildet sein. Bei einem solchen segmentierten Generator kann sich beispielsweise ein erstes Generatorsegment in der Umfangsrichtung mit 180°, ein zweites Generatorsegment mit 120° und ein drittes Generatorsegment mit 60° erstrecken. Beliebig andere Erstreckungen in der Umfangsrichtung der Generatorsegmente sind denkbar, sofern sie zusammengesetzt in der Umfangsrichtung eine Erstreckung von 360° ergeben. Die Ausführungen zu dem Generatorsegment können entsprechend für ein Rotorsegment eines segmentierten Rotors und/oder ein Statorsegment eines segmentierten Stators gelten.

Die erste und zweite Trennschnittstelle erstrecken sich im Wesentlichen orthogonal zu der Umfangsrichtung. Insbesondere definieren die erste und zweite Trennschnittstelle eine erste und zweite Trennschnittstellenebene, innerhalb derer sich die Drehachse erstreckt. Insbesondere erstrecken sich die erste und/oder zweite Trennschnittstelle derart, dass die erste und/oder zweite Trennschnittstellenebene sich in Bezug zu der Drehachse in einer Radialrichtung erstrecken. Insbesondere schneiden sich die erste und/oder zweite Trennschnittstellenebene, die sich in Bezug zu der Drehachse in der Radialrichtung erstrecken, in einer Achse, die die Drehachse ist oder definiert. Insbesondere liegt die Drehachse in der ersten und/oder zweiten Trennschnittstellenebene, die sich in Bezug zu der Drehachse in der Radialrichtung erstrecken.

Die erste und/oder zweite Trennschnittstelle eines Generatorsegments weist eine Verbindungsvorrichtung auf. Die Verbindungsvorrichtung an der ersten und/oder zweiten Trennschnittstelle ist dazu ausgebildet, benachbarte Generatorsegmente, die zu einem segmentierten Generator angeordnet sind, miteinander zu verbinden. Die Verbindungsvorrichtung der ersten und/oder zweiten Trennschnittstelle ist insbesondere dazu ausgebildet, benachbarte Generatorsegmente mechanisch zu verbinden. Die mechanische Verbindung kann als kraftschlüssige und/oder stoffschlüssige und/oder formschlüssige Verbindung ausgebildet sein. Bevorzugt weisen die erste und/oder zweite Trennschnittstelle einen Flanschanschluss und/oder eine Schraubverbindung als Verbindungsvorrichtung auf zur Befestigung in der Umfangsrichtung benachbarter Generatorsegmente. Die Ausführungen zu dem Generatorsegment können entsprechend für ein Rotorsegment eines segmentierten Rotors und/oder ein Statorsegment eines segmentierten Stators gelten.

Ergänzend oder alternativ ist ferner bevorzugt, dass der segmentierte Generator als permanenterregter segmentierter Generator ausgebildet ist. In dieser bevorzugten Ausführung ist vorgesehen, dass an dem Rotor ein oder mehrere Permanentmagnete angeordnet sind. Ein Permanentmagnet, auch Dauermagnet genannt, ist ein Magnet, der ein gleichbleibendes Magnetfeld aufweist, welches nicht-wie bei Elektromagneten -durch eine elektrische Leistung erzeugt wird. Der Permanentmagnet besteht aus einem magnetisierten Material. Beispiele magnetisierter Materialien eines Permanentmagneten sind Legierungen aus Eisen, Cobalt, Nickel etc.

Vorzugsweise ist der segmentierte Generator als Außenläufer ausgebildet. Bei einem als Außenläufer ausgebildeten segmentierten Generator befindet sich der Stator bzw. segmentierte Stator gegenüber dem Rotor bzw. segmentierten Rotor in Bezug zu der Drehachse in der Radialrichtung innenliegend. Üblicherweise umschließt bei einem als Außenläufer ausgebildeten segmentierten Generator dessen radial außenliegender segmentierter Rotor den radial innenliegenden segmentierten Stator.

Mit der segmentierten Bauweise des Generators lassen sich transportbedingte Größenbeschränkungen eines Generators überwinden. Insbesondere können segmentierte Generatoren, durch den vereinzelten Transport der Generatorsegmente, auch zu schwierig zugänglichen Aufstellorten von Windenergieanlagen transportiert und auf dem Turm der Windenergieanlagen an der Gondel montiert werden. Insbesondere sind für die Montage eines segmentierten Generators keine großen und teuren Spezialkräne erforderlich. Vielmehr lassen sich die Generatorsegmente einzeln an der Gondel bzw. dem Maschinenträger mit einem kleinen Kran positionieren, der lediglich die Masse eines einzelnen Generatorsegments tragen sowie die Montagehöhe erreichen muss. Hierdurch lassen sich Kosten einsparen, die ansonsten für die wesentlich teureren großen Kräne anfallen. Ferner sind solch großen Kräne in der Regel nur beschränkt verfügbar, so dass man durch den segmentierten Generator hinsichtlich der Montagezeit und auch dem Montageort an Flexibilität gewinnt.

Für weitere Vorteile, Ausführungsvarianten und Ausführungsdetails des erfindungsgemäßen segmentierten Generators und dessen Fortbildungen wird auch auf die nachfolgende Beschreibung zu den entsprechenden Merkmalen und Fortbildungen des Rotorsegments, des Generatorsegments und der Windenergieanlage verwiesen.

Gemäß einem weiteren Aspekt wird die Aufgabe durch ein Rotorsegment eines segmentierten Generators für eine Windenergieanlage nach Anspruch 2 gelöst.

Das Rotorsegment des segmentierten Generators umfasst ein Magnetträgersegment mit einer Rotorumfangsfläche. Die Rotorumfangsfläche ist insbesondere eine Rotoraußenumfangsfläche. Das Magnetträgersegment erstreckt sich in einer Umfangsrichtung zwischen einer ersten und zweiten Trennschnittstelle mit einer Segmentlänge. Die Rotorumfangsfläche weist einen ersten Trennschnittstellenabschnitt, einen zweiten Trennschnittstellenabschnitt und einen Verbindungsabschnitt auf. Der erste Trennschnittstellenabschnitt erstreckt sich mit einer ersten Länge ausgehend von der ersten Trennschnittstelle in der Umfangsrichtung in Richtung der zweiten Trennschnittstelle. Der zweite Trennschnittstellenabschnitt erstreckt sich mit einer zweiten Länge ausgehend von der zweiten Trennschnittstelle in der Umfangsrichtung in Richtung der ersten Trennschnittstelle. Der Verbindungsabschnitt erstreckt sich mit einer dritten Länge zwischen der ersten und zweiten Trennschnittstelle. Im Bereich des ersten und zweiten Trennschnittstellenabschnitts ist an der Rotorumfangsfläche jeweils eine Versteifungsvorrichtung zur Versteifung des Magnetträgersegments angeordnet.

Das Rotorsegment erstreckt sich bevorzugt in der Radialrichtung zwischen einem radial innenliegenden Flansch zur Befestigung des Rotorsegments an dem Rotor-Grundkörperflansch einer Lagereinheit und dem radial außenliegenden Magnetträgersegment. Vorzugsweise erstreckt sich das Rotorsegment mit einem Rotor-Tragabschnitt zwischen dem radial innenliegenden Flansch zur Befestigung des Rotorsegments an dem Rotor-Grundkörperflansch der Lagereinheit und dem radial außenliegenden Magnetträgersegment. Es ist zu verstehen, dass das Rotorsegment mehrteilig oder integral ausgebildet sein kann. Insbesondere ist zu verstehen, dass das Rotorsegment integral aus einzelnen miteinander verschweißten Rotorsegmenten ausgebildet sein kann. Das Rotorsegment weist insbesondere das Magnetträgersegment mit einer ringförmigen oder teilringförmigen Geometrie, mindestens ein Rotor-Blechpaket und einer Rotor-Innenumfangsfläche auf. Insbesondere ist das mindestens eine Rotor-Blechpaket stoffschlüssig und/oder kraftschlüssig und/oder formschlüssig mit dem Magnetträgersegment verbunden.

Vorzugsweise sind mehrere Magneteinheiten an dem Rotor-Blechpaket in der Umfangsrichtung beabstandet zueinander angeordnet und bilden und/oder definieren die Rotor-Innenumfangsfläche. Insbesondere sind in der Axialrichtung zwei oder mehrere Magneteinheiten beabstandet zueinander angeordnet, wobei die in der Axialrichtung benachbart angeordneten Magneteinheiten einen Umfangsspalt mit einer Spaltbreite zur Zufuhr und zum Verteilen eines Kühlungsmediums definieren. Die mindestens eine Magneteinheit ist insbesondere stoffschlüssig mit dem Rotor-Blechpaket verbunden. Vorzugsweise verbindet eine Vergussmasse, die die Magneteinheit zumindest teilweise umschließt, die Magneteinheit mit dem Rotor-Blechpaket.

Die Magneteinheiten sind auch als Rotor-Aktivteil bekannt.

Vorzugsweise weist das Magnetträgersegment in der Axialrichtung entlang der Drehachse eine Erstreckung mit einer Magnetträgersegmentbreite auf. Vorzugsweise ist die Breite des Magnetträgersegments über dessen Umfang konstant. Insbesondere weisen in der Axialrichtung der erste und zweite Trennschnittstellenabschnitt eine erste und zweite Breite und der Verbindungsabschnitt eine dritte Breite auf. Vorzugsweise sind die erste und zweite Breite identisch. Vorzugsweise entspricht die dritte Breite der ersten und/oder zweiten Breite. Vorzugsweise ist die dritte Breite kleiner als die erste und/oder zweite Breite.

Vorzugsweise weist das Magnetträgersegment in der Radialrichtung orthogonal zu der Drehachse eine Erstreckung mit einer Magnetträgersegmenthöhe auf. Vorzugsweise ist die Höhe des Magnetträgersegments über dessen Umfang konstant. Insbesondere weisen in der Axialrichtung der erste und zweite Trennschnittstellenabschnitt eine erste und zweite Höhe und der Verbindungsabschnitt eine dritte Höhe auf. Vorzugsweise sind die erste und zweite Höhe identisch. Vorzugsweise entspricht die dritte Höhe der ersten und/oder zweiten Höhe. Vorzugsweise ist die dritte Höhe kleiner als die erste und/oder zweite Höhe.

Die Angaben zur ersten und/oder zweiten und/oder dritten Länge und/oder Breite und/oder Höhe sind vorzugsweise jeweils als Angaben zu einer mittleren ersten und/oder zweiten und/oder dritten Länge und/oder Breite und/oder Höhe zu verstehen. Insofern können der erste und/oder zweite Trennschnittstellenabschnitt und/oder der Verbindungsabschnitt teilweise jeweils eine Länge und/oder Breite und/oder Höhe aufweisen, die von der ersten und/oder zweiten und/oder dritten Länge und/oder Breite und/oder Höhe abweichen. Es kann auch bevorzugt sein, dass die Angaben zur ersten und/oder zweiten und/oder dritten Länge und/oder Breite und/oder Höhe jeweils Angaben zu einer maximalen ersten und/oder zweiten und/oder dritten Länge und/oder Breite und/oder Höhe sind.

Die Versteifungsvorrichtung weist in der Umfangsrichtung eine Länge, in der Axialrichtung eine Breite und in der Radialrichtung eine Höhe auf. Vorzugsweise ist die Versteifungsvorrichtung länger als breit und/oder breiter als hoch.

Insbesondere entspricht die Länge der Versteifungsvorrichtung der ersten und/oder zweiten Länge des jeweiligen Trennschnittstellenabschnitts. Alternativ kann bevorzugt sein, dass die Länge der Versteifungsvorrichtung von der ersten und/oder zweiten Länge des jeweiligen Trennschnittstellenabschnitts verschieden ist. Insbesondere ist die Länge der Versteifungsvorrichtung kürzer als die erste und/oder zweite Länge des jeweiligen Trennschnittstellenabschnitts. Es kann auch bevorzugt sein, dass die Länge der Versteifungsvorrichtung länger als die erste und/oder zweite Länge des jeweiligen Trennschnittstellenabschnitts ist.

Insbesondere entspricht die Breite der Versteifungsvorrichtung der ersten und/oder zweiten Breite des jeweiligen Trennschnittstellenabschnitts. Alternativ kann bevorzugt sein, dass die Breite der Versteifungsvorrichtung von der ersten und/oder zweiten Breite des jeweiligen Trennschnittstellenabschnitts verschieden ist. Insbesondere ist die Breite der Versteifungsvorrichtung kürzer als die erste und/oder zweite Breite des jeweiligen Trennschnittstellenabschnitts. Es kann auch bevorzugt sein, dass die Breite der Versteifungsvorrichtung breiter als die erste und/oder zweite Breite des jeweiligen Trennschnittstellenabschnitts ist.

Insbesondere kann bevorzugt sein, dass die Versteifungsvorrichtung in der Umfangsrichtung über den ersten und/oder zweiten Trennschnittstellenabschnitt hinausragt. Es kann bevorzugt sein, dass die Versteifungsvorrichtung über die erste und/oder zweite Trennschnittstelle hinausragt. Insbesondere kann bevorzugt sein, dass die Versteifungsvorrichtung in der Axialrichtung über den ersten und/oder zweiten Trennschnittstellenabschnitt hinausragt.

Die jeweilige Versteifungsvorrichtung ist vorzugsweise mechanisch mit dem Magnetträgersegment verbunden. Insbesondere ist die jeweilige Versteifungsvorrichtung kraft- und/oder stoff- und/oder formschlüssig mit dem Magnetträgersegment verbunden. Insbesondere ist die jeweilige Versteifungsvorrichtung mit der Rotoraußenumfangsfläche mechanisch verbunden. Vorzugsweise ist die jeweilige Versteifungsvorrichtung mit dem Magnetträgersegment verschweißt. Es kann auch bevorzugt sein, dass die jeweilige Versteifungsvorrichtung mit dem Magnetträgersegment verschraubt ist. Ergänzend oder alternativ kann in einer bevorzugten Ausführung des Rotorsegments die jeweilige Versteifungsvorrichtung mit dem Magnetträgersegment durch entsprechend vorgesehene Vorsprünge und Aussparungen formschlüssig verbunden sein.

Vorzugsweise ist eine im Bereich des ersten Trennschnittstellenabschnitts angeordnete Versteifungsvorrichtung identisch zu einer im Bereich des zweiten Trennschnittstellenabschnitts angeordneten Versteifungsvorrichtung ausgebildet.

Die Anordnung der erfindungsgemäßen Versteifungsvorrichtung im Bereich des ersten und/oder zweiten Trennschnittstellenabschnitts ist insbesondere als zusätzliche Versteifung zu verstehen. Insbesondere ist in der Anordnung der erfindungsgemäßen Versteifungsvorrichtung im Bereich des ersten und/oder zweiten Trennschnittstellenabschnitts eine Versteifung zu verstehen, welche der Verbindungsabschnitt nicht aufweist. Insbesondere kann das Rotorsegment Versteifungsanordnungen aufweisen, die sowohl der erste und/oder zweite Trennschnittstellenabschnitt als auch der Verbindungsabschnitt aufweisen. In einer solchen Versteifungsanordnung ist vorzugsweise keine Versteifungsvorrichtung zu sehen, die im Bereich des ersten und/oder zweiten Trennschnittstellenabschnitts angeordnet ist. Insbesondere ist eine Versteifungsanordnung von der erfindungsgemäßen Versteifungsvorrichtung verschieden ausgebildet.

Die im Bereich des ersten und/oder zweiten Trennschnittstellenabschnitts angeordnete Versteifungsvorrichtung hat den Vorteil, dass das Rotorsegment in diesen Abschnitten, insbesondere im Bereich der ersten und/oder zweiten Trennschnittstelle, das Rotorsegment versteift. Die Versteifungsvorrichtung hat insbesondere den Effekt, dass im Bereich des ersten und/oder zweiten Trennschnittstellenabschnitts der Luftspalt zwischen einem Rotorsegment und einem Statorsegment eines Generatorsegments eines segmentierten Generators einem Luftspalt zwischen dem Rotorsegment und dem Statorsegment im Bereich des Verbindungsabschnitts entspricht. Insbesondere kann mit der Versteifungsvorrichtung der für einen Betrieb des segmentierten Generators "eingestellte" Luftspalt beibehalten werden. In besonders vorteilhafter Weise verhindert die Versteifungsvorrichtung im Bereich des ersten und/oder zweiten Trennschnittstellenabschnitts Dellenbildung, insbesondere, wenn die Generatorsegmente eines segmentierten Generators separat voneinander gelagert oder transportiert werden und nicht als ringförmig segmentierter Generator zusammengesetzt sind.

Ferner erleichtert die Versteifungsvorrichtung die Montage bzw. das Zusammensetzen der Generatorsegmente zu einem segmentierten Generator, da die Verbindungsvorrichtungen an der ersten und/oder zweiten Trennschnittstelle benachbarter Generatorsegmente plan zueinander ausgerichtet sind.

Für weitere Vorteile, Ausführungsvarianten und Ausführungsdetails des erfindungsgemäßen Rotorsegments und dessen Fortbildungen wird auf die zuvor erfolgte Beschreibung zu den entsprechenden Merkmalen und Fortbildungen des segmentierten Generators verwiesen.

Gemäß einer bevorzugten Ausführungsform des Rotorsegments versteift die Versteifungsvorrichtung das Magnetträgersegment im Bereich des ersten und/oder zweiten Trennschnittstellenabschnitts gegenüber dem Bereich des Magnetträgersegments im Verbindungsabschnitt lokal.

Nach einer weiteren bevorzugten Fortbildung des Rotorsegments weisen das Magnetträgersegment mit der Versteifungsvorrichtung im Bereich des ersten Trennschnittstellenabschnitts eine erste Steifigkeit auf, das Magnetträgersegment mit der Versteifungsvorrichtung im Bereich des zweiten Trennschnittstellenabschnitts eine zweite Steifigkeit auf, und der Verbindungsabschnitt eine dritte Steifigkeit auf, wobei die dritte Steifigkeit des Verbindungsabschnitts kleiner ist als die erste und/oder zweite Steifigkeit des ersten und/oder zweiten Trennschnittstellenabschnitts, und/oder die dritte Steifigkeit des Verbindungsabschnitts der ersten und/oder zweiten Steifigkeit des ersten und/oder zweiten Trennschnittstellenabschnitts entspricht, und/oder die dritte Steifigkeit des Verbindungsabschnitts größer ist als die erste und/oder zweite Steifigkeit des ersten und/oder zweiten Trennschnittstellenabschnitts.

Es kann bevorzugt sein, dass die erste Steifigkeit zwischen einer ersten Minimal- und Maximalsteifigkeit variiert. Ferner kann bevorzugt sein, dass die zweite Steifigkeit zwischen einer zweiten Minimal- und Maximalsteifigkeit variiert. Es kann auch bevorzugt sein, dass die dritte Steifigkeit zwischen einer dritten Minimal- und Maximalsteifigkeit variiert. Insbesondere variiert die erste und/oder zweite und/oder dritte Steifigkeit des jeweiligen Abschnitts in der Umfangsrichtung und/oder der Axialrichtung und/oder der Radialrichtung.

Insbesondere weisen der erste und/oder zweite Trennschnittstellenabschnitt und/oder der Verbindungsabschnitt, deren erste und/oder zweite und/oder dritte Steifigkeit variiert, eine erste und/oder zweite und/oder dritte mittlere Steifigkeit auf. Die jeweilige mittlere Steifigkeit liegt zwischen der jeweiligen Minimal- und Maximalsteifigkeit. Insbesondere ist die jeweilige Steifigkeit ein Mittelwert der Steifigkeiten eines jeweiligen Abschnitts. Ferner kann bevorzugt sein, dass die jeweilige mittlere Steifigkeit dem Mittelwert der jeweiligen Minimal- und Maximalsteifigkeit eines jeweiligen Abschnitts entspricht.

Vorzugsweise beträgt die erste und/oder zweite Steifigkeit im Bereich des ersten und/oder zweiten Trennschnittstellenabschnitts mindestens 105 %, 110 %, 120 %, 130 %, 140 %, 150 %, 200 % oder mehr. Insbesondere beträgt die die erste und/oder zweite Steifigkeit im Bereich des ersten und/oder zweiten Trennschnittstellenabschnitts maximal 500 %, 400 %, 300 %, 200 %, 150 %, 140 %, 130 %, 120 %, 110 % oder 105 %. Vorzugsweise beträgt die erste und/oder zweite mittlere Steifigkeit im Bereich des ersten und/oder zweiten Trennschnittstellenabschnitts mindestens 105 %, 110 %, 120 %, 130 %, 140 %, 150 %, 200 % oder mehr. Insbesondere beträgt die die erste und/oder zweite mittlere Steifigkeit im Bereich des ersten und/oder zweiten Trennschnittstellenabschnitts maximal 500 %, 400 %, 300 %, 200 %, 150 %, 140 %, 130 %, 120 %, 110 % oder 105 %.

Insbesondere ist die Steifigkeit Magnetträgersegment ohne die Versteifungsvorrichtung im Bereich des ersten und/oder zweiten Trennschnittstellenabschnitts geringer als im Bereich des Verbindungsabschnitts.

Die Steifigkeit der jeweiligen Abschnitte beschreibt insbesondere den Widerstand der jeweiligen Abschnitte gegen eine elastische Verformung, beispielsweise Dellenbildung, die durch die Anordnung von Permanentmagneten hervorgerufen werden kann. Insbesondere ist die Steifigkeit der jeweiligen Abschnitte derart zu wählen, dass die durch die Anordnung von Permanentmagneten wirkende Magnetkraft zwischen Rotorsegment und Statorsegment, lediglich eine Verformung des Rotorsegments, insbesondere des Magnetträgersegments, innerhalb festgelegter Toleranzen bewirkt.

Die Steifigkeit der jeweiligen Abschnitte umfasst eine Dehnsteifigkeit und/oder eine Schubsteifigkeit und/oder eine Biegesteifigkeit und/oder eine Torsionssteifigkeit. Beschreibungen allgemein zu der Steifigkeit, insbesondere zu der ersten und/oder zweiten und/oder dritten Steifigkeit, gelten vorzugsweise entsprechend für die Dehnsteifigkeit und/oder die Schubsteifigkeit und/oder die Biegesteifigkeit und/oder die Torsionssteifigkeit.

Gemäß einer ferner bevorzugten Ausführungsform des Rotorsegments sind der erste Trennschnittstellenabschnitt und der zweite Trennschnittstellenabschnitt im Wesentlichen gleich ausgebildet.

Dies hat den Vorteil, dass sich das Rotorsegment besonders kostengünstig herstellen lassen kann. Insbesondere lassen sich durch den Einsatz von Gleichteilen Skaleneffekte beim Einkauf der Gleichteile erzielen. Ferner minimiert die im Wesentlichen gleiche Ausbildung des ersten und/oder zweiten Trennschnittstellenabschnitts die Fehleranfälligkeit bei der Herstellung des Rotorsegments. Ferner erleichtert ein derart ausgebildetes Rotorsegment die Montage am Aufstellort des segmentierten Generators.

In einer weiteren bevorzugten Ausführungsform des Rotorsegments bilden das Magnetträgersegment und die Versteifungsvorrichtung in dem ersten und/oder zweiten Trennschnittstellenabschnitt einen Querschnitt mit einer Querschnittsfläche und/oder einer Querschnittsform, die von einer Querschnittsfläche und/oder einer Querschnittsform eines Querschnitts des Magnetträgersegments in dem Verbindungsabschnitt verschieden ist, wobei insbesondere die Querschnittsfläche des ersten und/oder zweiten Trennschnittstellenabschnitts größer ist als die Querschnittsfläche des Verbindungsabschnitts; und/oder der Querschnitt des ersten und/oder zweiten Trennschnittstellenabschnitts ein Flächenträgheitsmoment und/oder ein Torsionsträgheitsmoment aufweist, welches größer ist als ein Flächenträgheitsmoment und/oder ein Torsionsträgheitsmoment des Querschnitts des Verbindungsabschnitts.

Dies hat den Effekt, dass in dem ersten und/oder zweiten Trennschnittstellenabschnitt eine größere erste und/oder zweite Steifigkeit erlangt wird. Insbesondere hat dies den Effekt, dass die erste und/oder zweite Steifigkeit des ersten und/oder zweiten Trennschnittstellenabschnitts größer ist als die dritte Steifigkeit des Verbindungsabschnitts.

Gemäß einer ferner bevorzugten Ausführungsform des Rotorsegments weist die Versteifungsvorrichtung ein Material mit einem E-Modul auf oder besteht aus dem Material mit dem E-Modul, der Größer ist als ein E-Modul eines Materials, welches das Magnetträgersegment aufweist oder aus dem das Magnetträgersegment besteht.

Dies hat insbesondere den Vorteil, dass sich Material und insofern Gewicht einsparen lässt. Ferner führt die Materialeinsparung in bevorzugter Weise zu einer Kosteneinsparung.

In einerweiteren bevorzugten Fortbildung des Rotorsegments entspricht die erste und/oder zweite Länge des ersten und/oder zweiten Trennschnittstellenabschnitts mindestens 10 %, vorzugsweise mindestens 20 %, und maximal 50 %, vorzugsweise maximal 40 %, der Segmentlänge; und/oder das Magnetträgersegment weist entlang einer Drehachse eine Segmentbreite und die Versteifungsvorrichtung eine Breite auf, die mindestens 30 %, vorzugsweise mindestens 50 %, und maximal 80 %, vorzugsweise maximal 100 %, der Segmentbreite entspricht.

In einerweiteren bevorzugten Fortbildung des Rotorsegments entspricht die erste und/oder zweite Höhe des ersten und/oder zweiten Trennschnittstellenabschnitts mindestens 110 %, vorzugsweise mindestens 120 %, vorzugsweise mindestens 150 %, vorzugsweise mindestens 200 %, und maximal 500 %, vorzugsweise maximal 400 %, vorzugsweise maximal 300 %, der dritten Höhe des Verbindungsabschnitts des Magnetträgersegments. Vorzugsweise entspricht die erste und/oder zweite Höhe des ersten und/oder zweiten Trennschnittstellenabschnitts einer Höhe des Magnetträgersegments und/oder der Höhe der Versteifungsvorrichtung.

Insbesondere kann bevorzugt sein, dass die erste und/oder zweite Breite und/oder Höhe in Umfangsrichtung des ersten und/oder zweiten Trennschnittstellenabschnitts, insbesondere des Magnetträgersegments und/oder der Versteifungsvorrichtung im Bereich des ersten und/oder zweiten Trennschnittstellenabschnitts, ausgehend von der ersten und/oder zweiten Trennschnittstelle in Richtung des Verbindungsabschnitts variiert, vorzugsweise abnimmt. Insbesondere ist bevorzugt, dass die erste und/oder zweite Breite und/oder Höhe in Umfangsrichtung stetig, vorzugsweise linear und/oder konvex und/oder konkav, abnimmt. Vorzugsweise entspricht die erste und/oder zweite Breite und/oder Höhe des ersten und/oder zweiten Trennschnittstellenabschnitts am Übergang zu dem Verbindungsabschnitt der dritten Breite und/oder Höhe des Verbindungsabschnitts. Es kann auch bevorzugt sein, dass sich die Höhe und/oder Breite von dem Verbindungsabschnitt zu dem ersten und/oder zweiten Trennschnittstellenabschnitt unstetig, insbesondere stufenförmig, verändert.

Insbesondere ein kontinuierlicher Übergang von dem ersten und/oder zweiten Trennschnittstellenabschnitt zu dem Verbindungsabschnitt minimiert in bevorzugter Weise den Kerbeffekt.

Gemäß einer ferner bevorzugten Ausführungsform des Rotorsegments weist die Versteifungsvorrichtung ein flächiges Versteifungselement; und/oder einen oder mehrere Axialstege, die eine Haupterstreckung entlang der Drehachse aufweisen; und/oder einen oder mehrere Umfangsstege, die eine Haupterstreckung in Umfangsrichtung orthogonal zu der Drehachse aufweisen; und/oder einen oder mehrere Diagonalstege, die eine Haupterstreckung diagonal zu der Umfangsrichtung und der Drehachse aufweisen, auf.

Das flächige Versteifungselement erstreckt sich vorzugsweise über die erste und/oder zweite Länge und/oder Breite des ersten und/oder zweiten Trennschnittstellenabschnitts.

Die Axialstege und/oder Umfangsstege und/oder Diagonalstege weisen vorzugsweise ein I-förmiges und/oder U-förmiges und/oder Z-förmiges und/oder L-förmiges Querschnittprofil auf. Es kann auch bevorzugt sein, dass die Axialstege und/oder Umfangsstege und/oder Diagonalstege im Querschnitt ein Hohlprofil ausbilden. Insbesondere können die Hohlprofile rechteckige und/oder quadratische und/oder rohrförmige Hohlprofile sein.

Insbesondere können auch zwei flächige Versteifungselemente und zwei Umfangsstege und/oder zwei Axialstege ein kastenförmiges Profil bilden.

Es kann bevorzugt sein, dass die Axialstege einer Versteifungsvorrichtung mit mehreren Axialstegen eine unterschiedliche Länge und/oder Breite und/oder Höhe aufweisen. Es kann bevorzugt sein, dass die Umfangsstege einer Versteifungsvorrichtung mit mehreren Axialstegen eine unterschiedliche Länge und/oder Breite und/oder Höhe aufweisen. Es kann bevorzugt sein, dass die Diagonalstege einer Versteifungsvorrichtung mit mehreren Axialstegen eine unterschiedliche Länge und/oder Breite und/oder Höhe aufweisen.

In einer weiteren bevorzugten Ausführungsform des Rotorsegments sind mehrere Axialstege in der Umfangsrichtung äquidistant zueinander angeordnet; und/oder mehrere Umfangsstege in der Axialrichtung äquidistant zueinander angeordnet; und/oder ist das flächige Versteifungselement parallel beabstandet zu der Rotorumfangsfläche angeordnet.

In einer weiteren bevorzugten Ausführungsform des Rotorsegments ist die Versteifungsvorrichtung mit der Rotorumfangsfläche verschweißt und/oder verschraubt. Insbesondere kann die Versteifungsvorrichtung mit der Rotorumfangsfläche klebend verbunden sein.

In einer ferner bevorzugten Fortbildung umfasst das Rotorsegment ein Versteifungsringsegment, welches eine Wesentliche Haupterstreckungsrichtung in der Umfangsrichtung und/oder einer Radialrichtung aufweist, zur Versteifung des Rotorsegments.

Das Versteifungsringsegment ist auch als Versteifungsscheibe bekannt. Vorzugsweise wird das Versteifungsringsegment zwischen dem Magnetträgersegment und dem Rotor-Grundkörperflansch einer Lagereinheit angeordnet. Insbesondere ist das Versteifungsringsegment in der Axialrichtung beabstandet zu dem Rotor-Tragabschnitt angeordnet. Üblicherweise wird ein Statorsegment in der Axialrichtung zwischen dem Rotor-Tragabschnitt und dem Versteifungsringsegment angeordnet.

In dieser bevorzugten Ausführungsform verhindert das Versteifungsringsegment, eine Verformung des Rotorsegments, insbesondere des Magnetträgersegments in radialer Richtung. Insbesondere kann hierdurch ein für den Betrieb eingestellter Luftspalt zwischen dem Rotorsegment und dem Statorsegment eines Generatorsegments eines segmentierten Generators in der Umfangsrichtung gehalten werden. Ferner führt die durch das Versteifungsringsegment resultierende höhere Steifigkeit des Rotorsegments zu einer besseren Montierbarkeitvon benachbarten Rotorsegmenten zu einem ringförmigen segmentierten Rotor.

Gemäß einem weiteren Aspekt wird die Aufgabe durch ein Generatorsegment eines segmentierten Generators für eine Windenergieanlage nach Anspruch 13 gelöst.

Ein solches Generatorsegment eines segmentierten Generators einer Windenergieanlage umfasst, wie zuvor auch schon beschrieben, ein Rotorsegment eines Rotors. Insbesondere ist das Rotorsegment ein zuvor beschriebenes erfindungsgemäßes Rotorsegment und/oder eine zuvor beschriebene bevorzugte Fortbildung des Rotorsegments.

Für Vorteile, Ausführungsvarianten und Ausführungsdetails des erfindungsgemäßen Generatorsegments und dessen Fortbildungen wird auf die zuvor erfolgte Beschreibung zu den entsprechenden Merkmalen und Fortbildungen des segmentierten Generators sowie des Rotorsegments verwiesen.

In einer bevorzugten Fortbildung umfasst das Generatorsegment ein Statorsegment eines Stators. Insbesondere ist das Statorsegment in Bezug zu der Drehachse radial innenliegend zu dem Rotorsegment angeordnet. Insbesondere umschließt das Rotorsegment das Statorsegment. Dies führt in vorteilhafter Weise zu einem leistungsfähigeren Generator.

Gemäß einem weiteren Aspekt wird die Aufgabe mit einer Windenergieanlage nach Anspruch 15 gelöst.

Eine solche Windenergieanlage umfasst einen erfindungsgemäßen segmentierten Generator, insbesondere einen segmentierten Generator nach einer der zuvor beschriebenen Ausführungsformen oder einer Kombination daraus.

Für Vorteile, Ausführungsvarianten und Ausführungsdetails der erfindungsgemäßen Windenergieanlage und ihrer Fortbildungen wird auf die zuvor erfolgte Beschreibung zu den entsprechenden Merkmalen und Fortbildungen des segmentierten Generators sowie des Generatorsegments und des Rotorsegments verwiesen.

Bevorzugte Ausführungsformen der Erfindung werden beispielhaft anhand der beiliegenden Figuren erläutert. Es zeigen:
- Fig. 1:: eine schematische, dreidimensionale Ansicht einer beispielhaften Ausführungsform einer Windenergieanlage in einem Betriebszustand;
- Fig. 2:: eine schematische, dreidimensionale Ansicht einer beispielhaften Ausführungsform eines Generatorsegments mit einer bevorzugten Ausführungsform einer Versteifungsvorrichtung;
- Fig. 3:: eine schematische, dreidimensionale Ansicht einer beispielhaften Ausführungsform eines segmentierten Generators mit einer weiteren bevorzugten Ausführungsform einer Versteifungsvorrichtung;
- Fig. 4:: eine schematische, zweidimensionale Ansicht einer weiteren beispielhaften Ausführungsform eines Generatorsegments;
- Fig. 5a, b, c:: eine zweidimensionale Vorder-, Seiten- und Draufsicht eines Verbindungsabschnitts des in Fig. 4 dargestellten Generatorsegments; und
- Fig. 6a, b, c:: eine zweidimensionale Vorder-, Seiten- und Draufsicht eines ersten und zweiten Trennschnittstellenabschnitts des in Fig. 4 dargestellten Generatorsegments.

In den Figuren sind gleiche oder im Wesentlichen funktionsgleiche bzw. -ähnliche Elemente mit den gleichen Bezugszeichen bezeichnet. Sofern in der vorliegenden Figurenbeschreibung allgemein Bezug zu einem Generator, Rotor oder Stator genommen wird ist davon prinzipiell ein segmentierter Generator, segmentierte Rotor oder segmentierter Stator umfasst, sofern dies nicht ausdrücklich anders beschrieben ist.

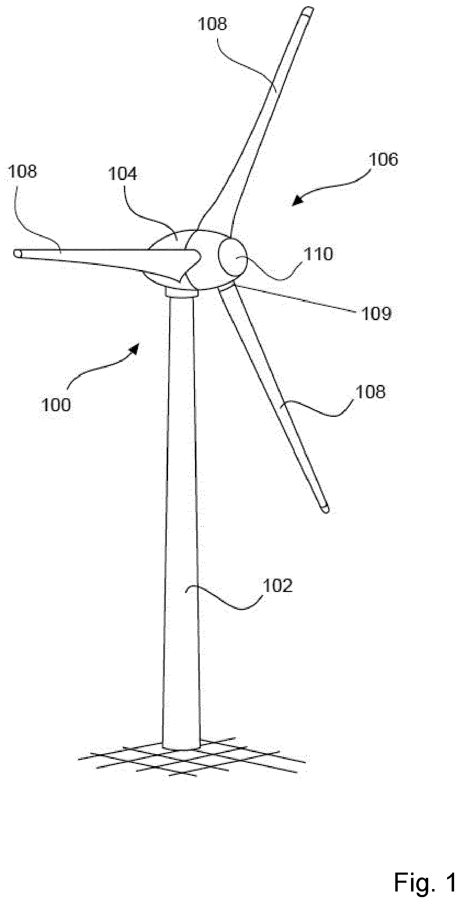

Figur 1 zeigt eine schematische, dreidimensionale Ansicht einer beispielhaften Ausführungsform einer Windenergieanlage. Figur 1 zeigt insbesondere eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an. Der Turm 102 weist insbesondere Windenergieanlagen-Stahlturmringsegmente mit Flanschsegmenten auf. Dadurch wird der Turm 102 mittels einfach zu transportierender Bauteile aufgebaut, die darüber hinaus mit hoher Präzision und geringem Aufwand verbunden werden können.

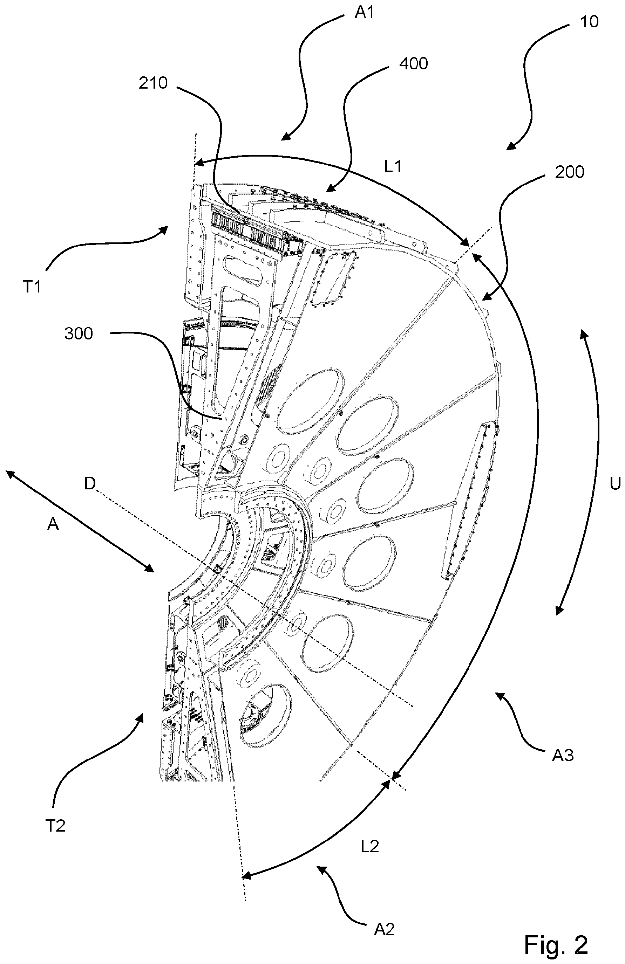

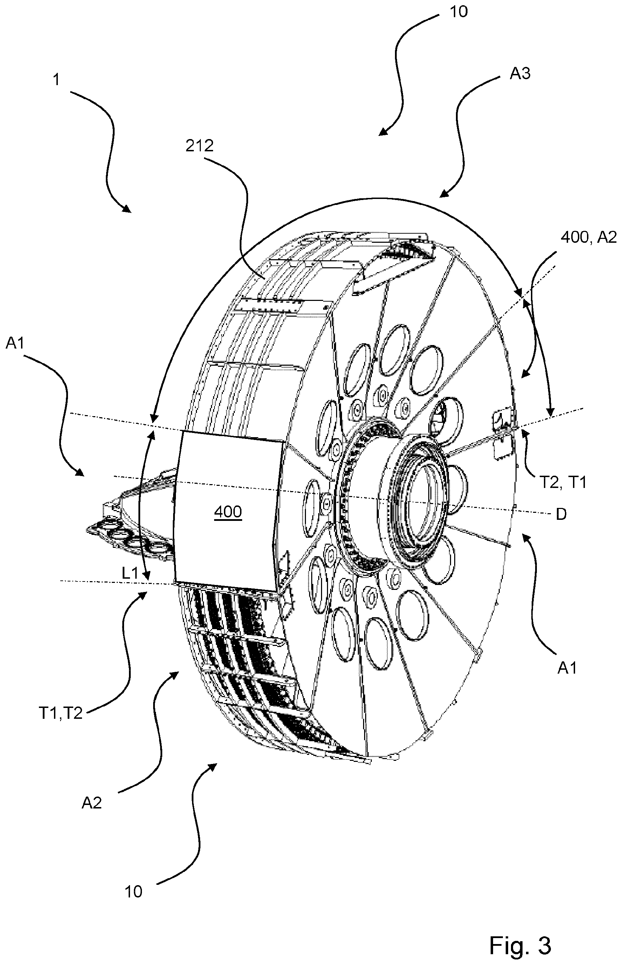

In Figur 2 ist eine schematische, dreidimensionale Ansicht einer bevorzugten Ausführungsform eines Generatorsegments 10 eines segmentierten Generators 1 dargestellt. In Figur 3 ist eine schematische, dreidimensionale Ansicht einer bevorzugten Ausführungsform eines segmentierten Generators 1, der aus zwei Generatorsegmenten 10 zusammengesetzt ist, gezeigt. Die Generatorsegmente 10 weisen ein Rotorsegment 200 und ein Statorsegment 300 auf. Die in den Figuren 2 und 3 dargestellten Generatorsegmente 10 sind für einen als Außenläufer ausgebildeten segmentierten Generator ausgebildet. Insofern ist das Statorsegment 300 innerhalb des Rotorsegments 200 angeordnet.

Die Generatorsegmente 10 bzw. die Rotorsegmente 200 und Statorsegmente 300 erstrecken sich in einer Umfangsrichtung U zwischen einer ersten Trennschnittstelle T1 und einer zweiten Trennschnittstelle T2. Die erste und zweite Trennschnittstelle T1, T2 definieren eine erste und zweite Trennschnittstellenebene, innerhalb derer sich die Drehachse D erstreckt.

Die erste und zweite Trennschnittstelle T1, T2 des Generatorsegments 10 weisen eine Verbindungsvorrichtung auf, die dazu ausgebildet ist, benachbarte Generatorsegmente 10, die zu einem segmentierten Generator 1 angeordnet werden, miteinander zu verbinden. In der bevorzugten Ausführungsform ist die Verbindungsvorrichtung der ersten und zweiten Trennschnittstelle T1, T2 dazu ausgebildet, benachbarte Generatorsegmente 10, d.h. benachbarte Rotorsegmente 200 und benachbarte Statorsegmente 300, mechanisch zu verbinden. Hierzu weisen die erste und zweite Trennschnittstelle T1, T2 einen Flanschanschluss und eine Schraubverbindung als Verbindungsvorrichtung auf. Aus dem in Figur 2 schematisch dargestellten Generatorsegment 10 geht eine mit Flanschanschlüssen ausgebildete Verbindungsvorrichtung an der ersten und zweiten Trennschnittstelle T1, T2 hervor. Bei dem in Figur 3 schematisch dargestellten segmentierten Generator 1 sind die beiden Generatorsegmente 10 an den jeweiligen Trennschnittstellen T1, T2 über die entsprechenden Flanschanschlüsse mit Schraubenverbindungen in Umfangsrichtung miteinander verbunden.

Die in den Figuren 2 und 3 dargestellten Rotorsegmente 200 weisen ein Magnetträgersegment 210 mit einer Rotorumfangsfläche 212 auf. An der Rotorumfangsfläche 212, insbesondere der Rotoraußenumfangsfläche, ist im Bereich des ersten und zweiten Trennschnittstellenabschnitts A1, A2 eine Versteifungsvorrichtung 400 angeordnet. Die Versteifungsvorrichtungen 400 in Figur 2 als auch in Figur 3 erstrecken sich in dem ersten und zweiten Trennschnittstellenabschnitt A1, A2 mit einer ersten und zweiten Länge L1, L2. Insbesondere erstrecken sich die Versteifungsvorrichtungen 400 in dem ersten und zweiten Trennschnittstellenabschnitt A1, A2 mit der gleichen Länge. Insbesondere sind die in dem Bereich des ersten und zweiten Trennschnittstellenabschnitts A1, A2 angeordneten Versteifungsvorrichtungen 400 gleich ausgebildet. Die erste und zweite Länge L1, L2 des ersten und zweiten Trennschnittstellenabschnitts A1, A2 entspricht in den in Figuren 2 und 3 dargestellten bevorzugten Ausführungsformen der Generatorsegmente 10 einem Sechstel der Segmentlänge des Rotorsegments 200. Die dritte Länge L3 der Verbindungsabschnitte A3 dieser bevorzugten Ausführungsformen der Generatorsegmente 10 entsprechen vier Sechstel der Segmentlänge des Rotorsegments 200.

Die in Figur 2 dargestellte bevorzugte Ausführung der Versteifungsvorrichtung 400 weist drei parallel zueinander und in der Axialrichtung A beabstandet angeordnete Umfangsstege auf, die mit Schraubverbindungen an dem Magnetträgersegment 210 befestigt sind. Figur 3 zeigt die Versteifungsvorrichtung 400 in einer weiteren bevorzugten Ausführungsform als sich flächig erstreckendes Versteifungselement., welches mittels einer Schweißverbindung mit dem Magnetträgersegment 210 verbunden ist. Sowohl in Figur 2 als auch in Figur 3 ist zu sehen, dass die in dem Bereich des ersten Trennschnittstellenabschnitts A1 angeordnete Versteifungsvorrichtung 400 eine Länge in der Umfangsrichtung U und eine Breite in der Axialrichtung A aufweist, die der ersten Länge und ersten Breite des ersten Trennschnittstellenabschnitts A1 entspricht.

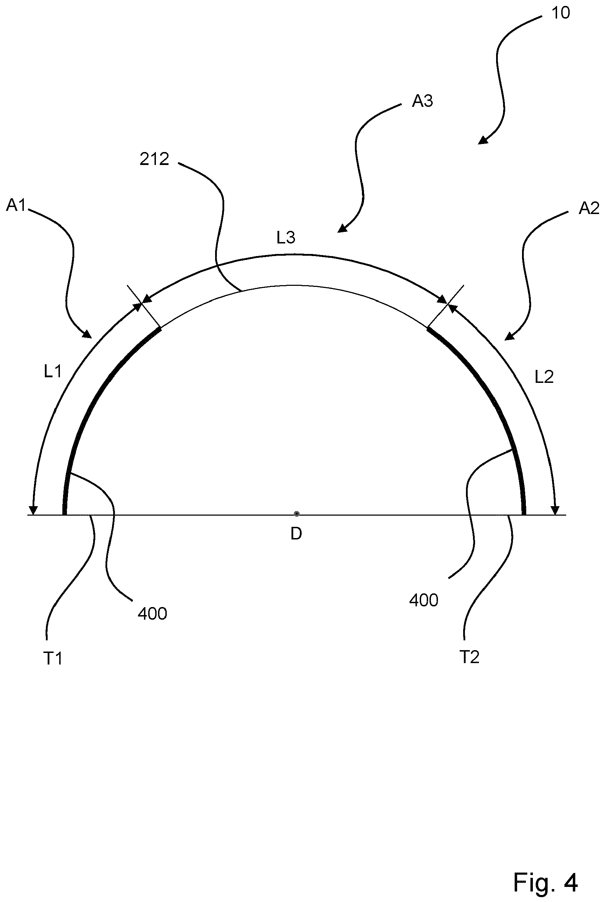

Figur 4 zeigt eine schematische, zweidimensionale Ansicht einer weiteren beispielhaften Ausführungsform eines Generatorsegments 10. In dieser bevorzugten Ausführungsform weist das Rotorsegment 200 einen ersten und zweiten Trennschnittstellenabschnitt A1, A2 auf, zwischen denen sich ein Verbindungsabschnitt A3 erstreckt. Der erste und zweite Trennschnittstellenabschnitt A1, A2 erstrecken sich ausgehend von einer ersten und zweiten Trennschnittstelle T1, T2 in Richtung Verbindungsabschnitts A3. In dieser bevorzugten Ausführungsform entsprechen die erste und zweite Länge L1, L2 des ersten und zweiten Trennschnittstellenabschnitts A1, A2 sowie die dritte Länge L3 des Verbindungsabschnitts A3 jeweils einem Drittel der Segmentlänge des Rotorsegments 200. In dieser bevorzugten Ausführungsform erstrecken sich in der Umfangsrichtung der erste und zweite Trennschnittstellenabschnitt A1, A2 sowie der Verbindungsabschnitt A3 mit derselben Länge. Ferner erstrecken sich die im Bereich des ersten und zweiten Trennschnittstellenabschnitts A1, A2 angeordneten Versteifungsvorrichtungen 400 mit der ersten bzw. zweiten Länge des jeweiligen Trennschnittstellenabschnitts A1, A2.

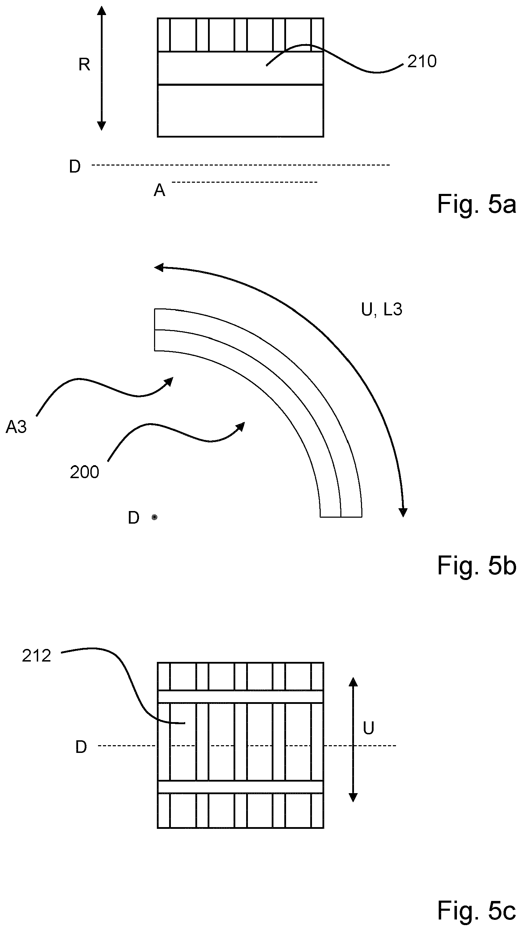

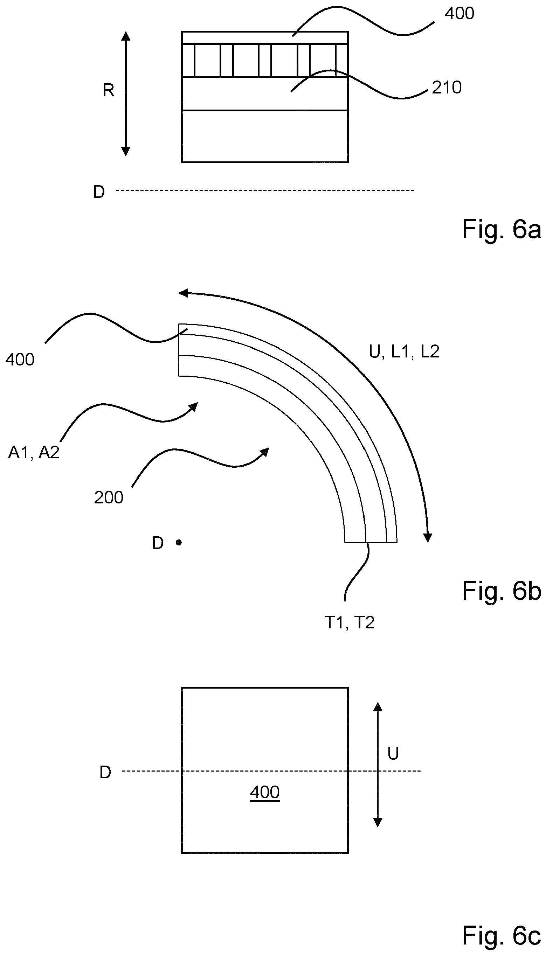

In den Figuren 5a, b, c ist eine schematische zweidimensionale Vorder-, Seiten- und Draufsicht des Verbindungsabschnitts der in Figur 3 dargestellten Generatorsegmente 10 gezeigt. In den Figuren 6a, b, c ist eine schematische zweidimensionale Vorder-, Seiten- und Draufsicht des ersten und zweiten Trennschnittstellenabschnitts A1, A2 der in Figur 3 dargestellten Generatorsegmente 10 gezeigt.

An der Rotoraußenumfangsfläche 212 des Magnetträgersegments 210 sind Umfangsstege angeordnet, die sich in der Umfangsrichtung U erstrecken, und Axialstege angeordnet, die sich in der Axialrichtung A entlang der Drehachse D erstrecken. Diese sind sowohl im Bereich des Verbindungsabschnitts A3 als auch im Bereich des ersten und zweiten Trennschnittstellenabschnitts A1, A2 angeordnet. Dies ist beispielhaft den beiden in Figur 3 gezeigten Generatorsegmenten 10 zu entnehmen. In dem in der Ansicht von Figur 3 oberen Generatorsegment 10 sind im Bereich des Verbindungsabschnitts A3 entsprechende Axialstege und Umfangsstege angeordnet. Diese werden in dem ersten Trennschnittstellenabschnitt A1 von der Versteifungsvorrichtung 400 verdeckt. In dem in Figur 3 dargestellten unteren Generatorsegment 10 ist für den zweiten Trennschnittstellenabschnitt A2 die Versteifungsvorrichtung nicht dargestellt, so dass hier die Anordnung der Axialstege und Umfangsstege hervorgeht. Schematisch sind die sich gleichmäßig in Umfangsrichtung zwischen der ersten und zweiten Trennschnittstelle T1, T2 erstreckenden und an der Rotorumfangsfläche 212 angeordneten Axial- und Umfangsstege auch den Figuren 6a und 6b zu entnehmen, auf denen ein sich flächig erstreckendes Versteifungselement als Versteifungsvorrichtung 400 angeordnet ist.

Es ist insbesondere zu verstehen, dass in diesen Axialstegen und Umfangsstegen, die sowohl im Bereich des Verbindungsabschnitts A3 als auch im Bereich des ersten und zweiten Trennschnittstellenabschnitts T1, T2 angeordnet sind, keine Versteifungsvorrichtung 400 im Sinne der Erfindung zu sehen ist. Vielmehr ist die erfindungsgemäße Versteifungsvorrichtung 400 als ergänzende Versteifung zu verstehen, die den ersten und/oder zweiten Trennschnittstellenabschnitt A1, A2 gegenüber dem Verbindungsabschnitt A3, insbesondere lokal, verstärkt bzw. versteift.

### BEZUGSZEICHENLISTE

- 1: segmentierter Generator
- 10: Generatorsegment
- 100: Windenergieanlage
- 102: Turm
- 104: Gondel
- 106: Rotor
- 108: Rotorblätter
- 109: Stator
- 110: Spinner
- 200: Rotorsegment
- 210: Magnetträger
- 212: Rotorumfangsfläche
- 300: Statorsegment
- 400: Versteifungsvorrichtung
- A: Axialrichtung
- A1: erster Trennschnittstellenabschnitt
- A2: zweiter Trennschnittstellenabschnitt
- A3: Verbindungsabschnitt
- D: Drehachse
- L1: erste Länge
- L2: zweite Länge
- L3: dritte Länge
- R: Radialrichtung
- T1: erste Trennschnittstelle
- T2: zweite Trennschnittstelle
- U: Umfangsrichtung

## Patentansprüche

1. Segmentierter Generator (1), insbesondere permanenterregter segmentierter Drehgenerator (1), für eine Windenergieanlage (100), umfassend zwei oder mehrere Generatorsegmente (10) nach einem der Ansprüche 13-14, wobei die zwei oder mehreren Generatorsegmente (10) ringförmig angeordnet sind.

2. Rotorsegment (200) eines segmentierten Generators (1), insbesondere eines permanenterregten segmentierten Drehgenerators (1), einer Windenergieanlage, **gekennzeichnet durch**
- ein Magnetträgersegment (210) mit einer Rotorumfangsfläche (212), insbesondere einer Rotoraußenumfangsfläche, der sich in einer Umfangsrichtung (U) zwischen einer ersten und zweiten Trennschnittstelle (T1, T2) mit einer Segmentlänge erstreckt; die Rotorumfangsfläche (212) aufweisend
∘ einen ersten Trennschnittstellenabschnitt (A1) mit einer ersten Länge (L1) ausgehend von der ersten Trennschnittstelle (T1) in der Umfangsrichtung (U) in Richtung der zweiten Trennschnittstelle (T2); und
∘ einen zweiten Trennschnittstellenabschnitt (A2) mit einer zweiten Länge (L2) ausgehend von der zweiten Trennschnittstelle (T2) in der Umfangsrichtung (U) in Richtung der ersten Trennschnittstelle (T1); und
∘ einen Verbindungsabschnitt (A3) mit einer dritten Länge (L3), die sich zwischen der ersten und zweiten Trennschnittstelle (T2) erstreckt; wobei
- im Bereich des ersten und zweiten Trennschnittstellenabschnitts (A1, A2) an der Rotorumfangsfläche (212) jeweils eine Versteifungsvorrichtung (400) zur Versteifung des Magnetträgersegments (210) angeordnet ist.

3. Rotorsegment (200) nach dem vorhergehenden Anspruch, wobei die Versteifungsvorrichtung (400) das Magnetträgersegment (210) im Bereich des ersten und/oder zweiten Trennschnittstellenabschnitts (A1, A2) gegenüber dem Bereich des Magnetträgersegments (210) im Verbindungsabschnitt (A3) lokal versteift.

4. Rotorsegment (200) nach einem der vorhergehenden Ansprüche 2-3, wobei das Magnetträgersegment (210) mit der Versteifungsvorrichtung (400) im Bereich des ersten Trennschnittstellenabschnitts (A1) eine erste Steifigkeit aufweist, das Magnetträgersegment (210) mit der Versteifungsvorrichtung (400) im Bereich des zweiten Trennschnittstellenabschnitts (A2) eine zweite Steifigkeit aufweist, und der Verbindungsabschnitt (A3) eine dritte Steifigkeit aufweist, wobei
- die dritte Steifigkeit des Verbindungsabschnitts (A3) kleiner ist als die erste und/oder zweite Steifigkeit des ersten und/oder zweiten Trennschnittstellenabschnitts (A1, A2), und/oder
- die dritte Steifigkeit des Verbindungsabschnitts (A3) der ersten und/oder zweiten Steifigkeit des ersten und/oder zweiten Trennschnittstellenabschnitts (A1, A2) entspricht, und/oder
- die dritte Steifigkeit des Verbindungsabschnitts (A3) größer ist als die erste und/oder zweite Steifigkeit des ersten und/oder zweiten Trennschnittstellenabschnitts (A1, A2).

5. Rotorsegment (200) nach einem der vorhergehenden Ansprüche 2-4, wobei der erste Trennschnittstellenabschnitt (A1) und der zweite Trennschnittstellenabschnitt (A2) im Wesentlichen gleich ausgebildet sind.

6. Rotorsegment (200) nach einem der vorhergehenden Ansprüche 2-5, wobei das Magnetträgersegment (210) und die Versteifungsvorrichtung (400) in dem ersten und/oder zweiten Trennschnittstellenabschnitt (A2) einen Querschnitt mit einer Querschnittsfläche und/oder einer Querschnittsform bildet, die von einer Querschnittsfläche und/oder einer Querschnittsform eines Querschnitts des Magnetträgersegments (210) in dem Verbindungsabschnitt (A3) verschieden ist, wobei insbesondere
- die Querschnittsfläche des ersten und/oder zweiten Trennschnittstellenabschnitts (A1, A2) größer ist als die Querschnittsfläche des Verbindungsabschnitts (A3); und/oder
- der Querschnitt der ersten und/oder zweiten Trennschnittstellenabschnitt (A2) ein Flächenträgheitsmoment und/oder ein Torsionsträgheitsmoment aufweist, welches größer ist als ein Flächenträgheitsmoment und/oder ein Torsionsträgheitsmoment des Querschnitts des Verbindungsabschnitts (A3).

7. Rotorsegment (200) nach einem der vorhergehenden Ansprüche 2-6, wobei die Versteifungsvorrichtung (400) aus einem Material besteht oder dieses umfasst, welches einen E-Modul aufweist, der Größer ist als ein E-Modul eines Materials, welches das Magnetträgersegment (210) umfasst oder aus dem das Magnetträgersegment (210) besteht.

8. Rotorsegment (200) nach einem der vorhergehenden Ansprüche 2-7, wobei
- die erste und/oder zweite Länge des ersten und/oder zweiten Trennschnittstellenabschnitts (A1, A2) mindestens 10 %, vorzugsweise mindestens 20 %, und maximal 50 %, vorzugsweise maximal 40 %, der Segmentlänge entspricht; und/oder
- das Magnetträgersegment (210) entlang einer Drehachse (D) eine Segmentbreite aufweist und die Versteifungsvorrichtung (400) eine Breite aufweist, die mindestens 30 %, vorzugsweise mindestens 50 %, und maximal 80 %, vorzugsweise maximal 100 %, der Segmentbreite entspricht.

9. Rotorsegment (200) nach einem der vorhergehenden Ansprüche 2-8, die Versteifungsvorrichtung (400) aufweisend
- ein flächiges Versteifungselement; und/oder
- einen oder mehrere Axialstege, die eine Haupterstreckung entlang der Drehachse (D) aufweisen; und/oder
- einen oder mehrere Umfangsstege, die eine Haupterstreckung in Umfangsrichtung (U) orthogonal zu der Drehachse (D) aufweisen; und/oder
- einen oder mehrere Diagonalstege, die eine Haupterstreckung diagonal zu der Umfangsrichtung (U) und der Drehachse (D) aufweisen.

10. Rotorsegment (200) nach einem der vorhergehenden Ansprüche 2-9, wobei
- mehrere Axialstege in der Umfangsrichtung (U) äquidistant zueinander angeordnet sind; und/oder
- mehrere Umfangsstege in der Axialrichtung äquidistant zueinander angeordnet sind; und/oder
- das flächige Versteifungselement parallel beabstandet zu der Rotorumfangsfläche (212) angeordnet ist.

11. Rotorsegment (200) nach einem der vorhergehenden Ansprüche 2-10, wobei die Versteifungsvorrichtung (400) mit der Rotorumfangsfläche (212) verschweißt und/oder verschraubt ist.

12. Rotorsegment (200) nach einem der vorhergehenden Ansprüche 2-11, umfassend ein Versteifungsringsegment (410), welches eine Wesentliche Haupterstreckungsrichtung in der Umfangsrichtung (U) und/oder einer Radialrichtung (R) aufweist, zur Versteifung des Rotorsegments (200).

13. Generatorsegment (10) eines segmentierten Generators (1), insbesondere eines permanenterregten segmentierten Drehgenerators (1), für eine Windenergieanlage (100), umfassend ein Rotorsegment (200) nach einem der vorhergehenden Ansprüche 2-12.

14. Generatorsegment (10) nach dem vorhergehenden Anspruch, umfassend ein Statorsegment (300).

15. Windenergieanlage (100) umfassend einen segmentierten Generator (1) nach Anspruch 1.
